Europäisches Patentamt

European Patent Office

Office européen des brevets

(19)

(11) Veröffentlichungsnummer: **0 511 489 B1**

## (12) EUROPÄISCHE PATENTSCHRIFT

(45) Veröffentlichungstag der Patentschrift: **05.07.95**

(51) Int. Cl.6: **C01B 21/068**

(21) Anmeldenummer: **92105032.4**

(22) Anmeldetag: **24.03.92**

(54) **Verfahren zur Herstellung von Siliciumnitrid mit kleiner Kristallitgrösse.**

(30) Priorität: **27.04.91 DE 4113884**

(43) Veröffentlichungstag der Anmeldung:
**04.11.92 Patentblatt 92/45**

(45) Bekanntmachung des Hinweises auf die
Patenterteilung:
**05.07.95 Patentblatt 95/27**

(84) Benannte Vertragsstaaten:
**CH DE FR GB IT LI SE**

(56) Entgegenhaltungen:
**EP-A- 0 358 975**
**EP-A- 0 361 061**

(73) Patentinhaber: **HOECHST AKTIENGESELL-
SCHAFT**

**D-65926 Frankfurt (DE)**

(72) Erfinder: **Krause, Werner, Dr.
Henriette-Lott-Weg 8
W-5030 Hürth (DE)**

EP 0 511 489 B1

**Beschreibung**

Die vorliegende Erfindung betrifft ein Verfahren zur Herstellung von Siliciumnitrid mit kleiner Kristallitgröße.

Siliciumnitrid kann nach verschiedenen Verfahren hergestellt werden:

a) Direktnitridierung von Siliciumpulver

$$3\ Si\ +\ 2\ N_2\ \text{--->}\ Si_3N_4$$

b) Carbothermische Reduktion

$$3\ SiO_2\ +\ 6\ C\ +\ 2\ N_2\ \text{--->}\ Si_3N_4\ +\ 6\ CO$$

c) Siliciumdiimid-Fällung und Zersetzung

$$SiCl_4\ +\ 6\ NH_3\ \text{--->}\ Si(NH)_2\ +\ 4\ NH_4Cl$$
$$3\ Si(NH)_2\ \text{--->}\ Si_3N_4\ +\ 2\ NH_3$$

d) Gasphasenreaktion

$$3\ SiCl_4\ +\ 4\ NH_3\ \text{--->}\ Si_3N_4\ +\ 4\ HCl$$

Mit diesen Verfahren wird kristallines Siliciumnitrid hergestellt, dessen Feinteiligkeit, ausgedrückt durch die spezifische Oberfläche (BET), üblicherweise im Bereich zwischen 1 und 15 $m^2$/g liegt und eine Kristallitgröße von etwa 70 bis 90 nm, ermittelt aus Röntgendiffraktometeraufnahmen, hat.

Aus EP-A-0358975 und EP-A-0361061 ist ein Verfahren zur zur Herstellung von $Si_3N_4$ mit einem Sauerstoffgehalt von kleiner als 0,4 bzw 1,8 Gew% une eine spezifische Oberfläche (BET) von bis zu 13,3 $m^2$/g bekannt. Der Feuchtigkeitsgehalt in der Atmosphere bei der Handhabung soll unter 5 ppm liegen.

Es war daher die Aufgabe gestellt, ein Verfahren anzugeben, mit welchem ein Siliciumnitrid mit einer Kristallitgröße von 40 bis 60 nm und einer spezifischen Oberfläche nach BET von 21 bis 40 $m^2$/g hergestellt werden kann und welches höchstens Spuren an amorphem Siliciumnitrid von weniger als 2 % enthält.

Diese Aufgabe konnte überraschend dadurch gelöst werden, daß man amorphes Siliciumnitrid und/oder amorphes Siliciumnitridimid in Oberflächenkontakt mit

a) wasserdampfhaltigem Gas

oder

b) wasserhaltigen Lösemitteln

bringt und das oberflächenkontaktierte amorphe Siliciumnitrid und/oder Siliciumnitridimid unter Stickstoffatmosphäre mit einer Aufheizgeschwindigkeit von mindestens 1 °C/Minute bis oberhalb der Kristallisationstemperatur von $\alpha$-Siliciumnitrid, die oberhalb von 1100 °C liegt, aufheizt.

Das Verfahren gemäß der Erfindung kann weiterhin wahlweise auch noch dadurch ausgestaltet sein, daß man

a) ein amorphes Siliciumnitrid einsetzt, welches durch Reaktion von $SiCl_4$ und $NH_3$ und anschließender Erhitzung auf etwa 1000 °C erhalten wurde (näher beschrieben in der Patentanmeldung DE-P-40 37 449.1);

b) als amorphes Siliciumnitrid ein teilhydrolysiertes Siliciumnitrid einsetzt, welches durch die Umsetzung von $SiCl_4$ mit feuchtem $NH_3$ und anschließender Erhitzung auf etwa 1000 °C erhalten wurde (die Umsetzung mit wasserfreiem Ammoniak anstelle feuchtem Ammoniak ist in der Patentanmeldung DE-P-40 37 449.1 beschrieben);

c) das amorphe Siliciumnitrid 0,5 bis 30 Stunden, insbesondere 1 bis 8 Stunden, mit wasserdampfhaltigem Gas kontaktiert;

d) als wasserhaltiges Lösemittel i-Propanol mit 0,1 bis 10 Vol.-% Wasser verwendet;

e) als wasserdampfhaltiges Gas unbehandelte Luft verwendet.

Die maximale Aufheizgeschwindigkeit wird durch die Energieaufnahme des Tiegelofens vorgegeben. Temperaturerhöhungen von 20 °C/Minute oder mehr sind bei der erfindungsgemäßen Arbeitsweise möglich.

Um sicherzustellen, daß das gesamte Siliciumnitrid in kristalliner Form vorliegt, ist eine gewisse Temperzeit von etwa 10 bis 100 Minuten sinnvoll.

Die spezifische Oberfläche wird mit Stickstoff nach der Methode Brunauer, Emett und Teller (Oberflächenbestimmung nach BET), vgl. Zeitschrift Analytische Chemie, Band 238 (1968), Seiten 187 bis 193, bestimmt.

Die spezifische Oberfläche ist ein Maß für die Korngröße, sofern das Produkt durchkristallisiert ist und keine amorphen Anteile oder Mikroporosität aufweist. Amorphe Anteile oder eine Mikroporosität erhöhen den Wert der spezifischen Oberfläche drastisch und erlauben dann keine Aussage über die Korngröße.

Werte über die Kristallitgröße von Siliciumnitrid werden aus Röntgendiffraktometeraufnahmen ermittelt. Aufgrund der kleinen Kristallitgrößen ergeben sich beim Siliciumnitrid sehr deutliche Reflexverbreiterungen. Die Bestimmung der Kristallitgröße durch Messung der Halbwertsbreite am Reflex (201) erfolgt nach der Formel, vergl. H. Krischner "Einführung in die Röntgenstrukturanalyse", 3. Aufl., Vieweg-Verlag (1987):

$$D = \frac{\lambda \cdot 57,3}{\cos \theta \cdot \beta^{1/2}}$$

D: Kristallitgröße in nm
$\lambda$: Wellenlänge CuK $\alpha$ (0,15406 nm)
$\theta$: Beugungswinkel (in Grad $\theta$ für Reflex (201) = 15,50°
$\beta^{1/2}$: Reflexbreite in Höhe der halben Maximalintensität (in Grad $\theta$)

Es wurde gefunden, daß die Kristallitgröße im Siliciumnitrid durch die auf das Siliciumnitrid aufgebrachte Wassermenge gesteuert werden kann. Bis zu einem Sauerstoffgehalt von etwa 4 Gew.-% im Endprodukt sinkt die Kristallitgröße. Oberhalb von etwa 4 Gew.-% enthalten die Endprodukte steigende, unerwünschte Anteile an amorphem Siliciumnitrid. Die aufgebrachte Wassermenge kann leicht durch die Gewichtszunahme bestimmt werden. Eine Gewichtszunahme durch das aufgebrachte Wasser von 1 Gew.-% entspricht einer zusätzlichen Sauerstoffmenge von 0,8 - 1 Gew.-% im Endprodukt.

Das erhaltene Endprodukt enthält noch bis zu 10 % $\beta$-Siliciumnitrid, Rest $\alpha$-Siliciumnitrid und eignet sich in dieser Form insbesondere als Impfmaterial bei der Herstellung von feinteiligem Siliciumnitrid, welches seinerseits zur Herstellung von gesintertem Siliciumnitrid verwendet wird.

Ein amorphes Siliciumnitrid, welches vorzugsweise im erfindungsgemäßen Herstellverfahren eingesetzt wird, kann beispielsweise gemäß Beispiel 1 der DE-P 40 37 449.1 erhalten werden:

In einem senkrecht stehenden Reaktionsbehälter wird in seinem unteren Teil ein Siliciumtetrachlorid-Stickstoff-Gasgemisch eingeleitet, welches durch Durchleiten von 200 l/h Stickstoff durch auf ca. 25 °C gehaltenes Siliciumtetrachlorid erhalten wird. In den oberen Teil des Reaktionsbehälters strömen 450 l/h trockenes Ammoniakgas ein.

Am Boden des Reaktionsbehälters werden 0,8 kg/h Siliciumtetrachlorid-Ammoniak-Reaktionsprodukt entnommen.

Nach Erhitzen des Siliciumtetrachlorid-Ammoniak-Reaktionsproduktes im Glühofen auf 1000 °C in Ammoniak-Atmosphäre wird ein amorphes Siliciumnitrid mit Teilchengrößen von 5 bis 10 $\mu$m erhalten, dessen Gehalt an Chlor < 0,5 Gew.-% sowie an Kohlenstoff < 0,06 Gew.-% beträgt und welches eine spezifische Oberfläche (BET) von 360 m²/g hat.

Die Erfindung wird anhand der nachfolgenden Beispiele näher erläutert.

Siliciumnitrid-Herstellung:

Das Beispiel 1 der DE-P 40 37 449.1, im Anmeldetext vorher beschrieben, wurde nachgearbeitet. Das amorphe Siliciumnitrid hatte folgende Qualitätsmerkmale:

| | |
|---|---|
| 1) Spezifische Oberfläche (BET): | 340 m²/g |
| 2) Chlorgehalt: | 0,30 Gew.-% |
| 3) Kohlenstoffgehalt: | < 0,06 Gew.-% |

Vergleichsbeispiel 1 (Stand der Technik):

25 g des hergestellten amorphen Siliciumnitrids wurden unter Luft- und Feuchtigkeitsausschluß in einem $Si_3N_4$-Tiegel im Tiegelofen unter Stickstoffatmosphäre mit einer Aufheizgeschwindigkeit von 10 °C/Minute auf 1480 °C aufgeheizt und 1 Stunde lang bei dieser Temperatur getempert.

Das nach dem Abkühlen entnommene, vollständig kristalline Siliciumnitrid hatte eine spezifische Oberfläche (BET) von 10 $m^2$/g und einen Sauerstoffgehalt von 0,8 Gew.-%. Die röntgenographische Phasenanalyse ergab 84 % $\alpha$-$Si_3N_4$ und 16 % $\beta$-$Si_3N_4$. Aus der Reflexverbreiterung wurde eine Kristallitgröße von 65 nm ermittelt.

Beispiel 1 (erfindungsgemäß):

25 g des hergestellten amorphen Siliciumnitrids wurden in einem $Si_3N_4$-Tiegel 1 Stunde lang an der Luft stehengelassen. Zum besseren Kontakt mit der Luft wurde das Pulver 5 mal mit einem Löffel durchgemischt. Anschließend wurde das Siliciumnitrid im Tiegelofen unter Stickstoffatmosphäre mit einer Aufheizgeschwindigkeit von 10 °C/Minute auf 1480 °C aufgeheizt und 1 Stunde lang bei dieser Temperatur getempert. Das nach dem Abkühlen entnommene, vollständig kristalline Siliciumnitrid hatte eine spezifische Oberfläche (BET) von 21 $m^2$/g und einen Sauerstoffgehalt von 1,3 Gew.-%. Die röntgenographische Phasenanalyse ergab 90 % $\alpha$-$Si_3N_4$ und 10 % $\beta$-$Si_3N_4$. Aus der Reflexverbreiterung wurde eine Kristallitgröße von 57 nm ermittelt.

Beispiel 2 (erfindungsgemäß):

Es wurde wie in Beispiel 1 verfahren, jedoch wurde die Verweilzeit an der Luft auf 2 Stunden erhöht. Das vollständig kristallisierte Siliciumnitrid hatte eine spezifische Oberfläche (BET) von 23 $m^2$/g und einen Sauerstoffgehalt von 1,6 Gew.-%. Die röntgenographische Phasenanalyse ergab 91 % $\alpha$-$Si_3N_4$ und 9 % $\beta$-$Si_3N_4$. Aus der Reflexverbreiterung wurde eine Kristallitgröße von 56 nm ermittelt.

Beispiel 3 (erfindungsgemäß):

Es wurde wie in Beispiel 1 verfahren, jedoch wurde die Verweilzeit an der Luft auf 4 Stunden erhöht. Das vollständig kristallisierte Siliciumnitrid hatte eine spezifische Oberfläche (BET) von 24 $m^2$/g und einen Sauerstoffgehalt von 1,8 Gew -%. Die röntgenographische Phasenanalyse ergab 91 % $\alpha$-$Si_3N_4$ und 9 % $\beta$-$Si_3N_4$. Aus der Reflexverbreiterung wurde eine Kristallitgröße von 54 nm ermittelt.

Beispiel 4 (erfindungsgemäß):

75 g eines nach DE-P 40 37 449.1 hergestellten amorphen Siliciumnitrids mit einer spezifischen Oberfläche (BET) von 350 $m^2$/g und einem Chlorgehalt von 0,84 Gew.-% wurden in einem Graphit-Tiegel 3 Stunden lang an angefeuchteter Luft stehengelassen. Dabei trat eine Gewichtszunahme von 1,2 g ein. Anschließend wurde das Pulver im Tiegelofen unter Stickstoffatmosphäre mit einer Aufheizgeschwindigkeit von 10 °C/Minute auf 1480 °C aufgeheizt und 1 Stunde lang bei dieser Temperatur getempert. Das nach dem Abkühlen entnommene, vollständig kristalline Siliciumnitrid hatte eine spezifische Oberfläche (BET) von 23 $m^2$/g, die röntgenographische Phasenanalyse ergab 94,5 % $\alpha$-$Si_3N_4$ und 5,5 % $\beta$-$Si_3N_4$. Aus der Reflexverbreiterung wurde eine Kristallitgröße von 56 nm ermittelt.

Beispiel 5 (erfindungsgemäß):

100 g eines nach DE-P 40 37 449.1 hergestellten amorphen Siliciumnitrids mit einer spezifischen Oberfläche (BET) von 350 $m^2$/g und einem Chlorgehalt von 0,16 Gew.-% wurden im Graphit-Tiegel 6,5 Stunden lang angefeuchteter Luft ausgesetzt. Dabei trat eine Gewichtszunahme von 1,6 g ein. Anschließend wurde das Pulver im Tiegelofen unter Stickstoffatmosphäre mit einer Aufheizgeschwindigkeit von 10 °C/Minute auf 1480 °C aufgeheizt und 1 Stunde lang bei dieser Temperatur getempert. Das nach dem Abkühlen entnommene, vollständig kristalline Siliciumnitrid hatte eine spezifische Oberfläche (BET) von 34 $m^2$/g, die röntgenographische Phasenanalyse ergab 92 % $\alpha$-$Si_3N_4$ und 8 % $\beta$-$Si_3N_4$. Aus der Reflexverbreiterung wurde eine Kristallitgröße von 52 nm ermittelt.

Beispiel 6 (erfindungsgemäß):

100 g eines nach DE-P 40 37 449.1 hergestellten amorphen Siliciumnitrids mit einer spezifischen Oberfläche von 360 $m^2$/g und einem Chlorgehalt von 0,13 Gew.-% wurden im Graphit-Tiegel 6,5 Stunden lang angefeuchteter Luft ausgesetzt. Dabei trat eine Gewichtszunahme von 2,1 g ein. Anschließend wurde

4

das Pulver im Tiegelofen unter Sticktoffatmosphäre mit einer Aufheizgeschwindigkeit von 10 °C/Minute auf 1480 °C aufgeheizt und 1 Stunde lang bei dieser Temperatur getempert.

Das nach dem Abkühlen entnommene, vollständig kristalline Siliciumnitrid hatte eine spezifische Oberfläche (BET) von 39 m$^2$/g, die röntgenographische Phasenanalyse ergab 91,5 % $\alpha$-Si$_3$N$_4$ und 8,5 % $\beta$-Si$_3$N$_4$. Aus der Reflexverbreiterung wurde eine Kristallitgröße von 45 nm ermittelt.

Beispiel 7 (erfindungsgemäß):

130 g eines nach DE-P 40 37 449.1 hergestellten amorphen Siliciumnitrids mit einer spezifischen Oberfläche von 350 m$^2$/g und einem Chlorgehalt von 0,32 Gew.-% wurden in einen drehenden Rotationsverdampferkolben gefüllt und 3 Stunden lang über die Pulverschüttung 20 l/h feuchter Stickstoff (20 g H$_2$O/m$^3$) geleitet. Es wurde eine Gewichtszunahme von 1,2 g festgestellt. Anschließend wurde das Pulver im Graphit-Tiegel im Tiegelofen unter Stickstoffatmosphäre mit einer Aufheizgeschwindigkeit von 10 °C/Minute auf 1480 °C aufgeheizt und 1 Stunde lang bei dieser Temperatur getempert. Das nach dem Abkühlen entnommene, vollständig kristalline Siliciumnitrid hatte eine spezifische Oberfläche (BET) von 21 m$^2$/g, die röntgenographische Phasenanalyse ergab 92 % $\alpha$-Si$_3$N$_4$ und 8 % $\beta$-Si$_3$N$_4$. Aus der Reflexverbreiterung wurde eine Kristallitgröße von 59 nm ermittelt.

Beispiel 8 (erfindungsgemäß):

130 g des auch im Beispiel 7 eingesetzten amorphen Siliciumnitrids wurden in 1 l i-Propanol mit 1,3 Vol.-% Wasser suspendiert und das Suspensionsmittel anschließend abdestilliert. Das Siliciumnitrid wurde dann im Graphit-Tiegel im Tiegelofen unter Stickstoffatmosphäre mit einer Aufheizgeschwindigkeit von 10 °C/Minute auf 1480 °C aufgeheizt und 1 Stunde lang bei dieser Temperatur getempert. Das nach dem Abkühlen entnommene, vollständig kristalline Siliciumnitrid hatte eine spezifische Oberfläche (BET) von 26 m$^2$/g, die röntgenographische Phasenanalyse ergab 92 % $\alpha$-Si$_3$N$_4$ und 8 % $\beta$-Si$_3$N$_4$. Aus der Reflexverbreiterung wurde eine Kristallitgröße von 55 nm ermittelt.

**Patentansprüche**

1. Verfahren zur Herstellung von Siliciumnitrid mit einer Kristallitgröße von 40 bis 60 nm und einer spezifischen Oberfläche nach BET von 21 bis 40 m$^2$/g, dadurch gekennzeichnet, daß man amorphes Siliciumnitrid und/oder amorphes Siliciumnitridimid in Oberflächenkontakt mit
   a) wasserdampfhaltigem Gas
   oder
   b) wasserhaltigen Lösemitteln
bringt und das oberflächenkontaktierte amorphe Siliciumnitrid und/oder amorphe Siliciumnitridimid unter Stickstoffatmosphäre mit einer Aufheizgeschwindigkeit von mindestens 1 °C/Minute bis oberhalb der Kristallisationstemperatur von $\alpha$-Siliciumnitrid, die oberhalb von 1100 °C liegt, aufheizt.

2. Verfahren nach Anspruch 1, dadurch gekennzeichnet, daß man ein amorphes Siliciumnitrid einsetzt, welches durch Reaktion von SiCl$_4$ mit NH$_3$ und anschließender Erhitzung in Ammoniak-Atmosphäre auf etwa 1000 °C erhalten wurde.

3. Verfahren nach Anspruch 1, dadurch gekennzeichnet, daß man als amorphes Siliciumnitrid ein teilhydrolysiertes Siliciumnitrid einsetzt, welches durch die Umsetzung von SiCl$_4$ mit feuchtem NH$_3$ und anschließender Erhitzung in Ammoniak-Atmosphäre auf etwa 1000 °C erhalten wurde.

4. Verfahren nach einem der Ansprüche 1 bis 3, dadurch gekennzeichnet, daß man das amorphe Siliciumnitrid 0,5 bis 30 Stunden, insbesondere 1 bis 8 Stunden, mit wasserdampfhaltigem Gas kontaktiert.

5. Verfahren nach einem der Ansprüche 1 bis 3, dadurch gekennzeichnet, daß man als wasserhaltiges Lösemittel i-Propanol mit 0,5 bis 10 Vol.-% Wasser verwendet.

6. Verfahren nach Anspruch 4, dadurch gekennzeichnet, daß man als wasserdampfhaltiges Gas unbehandelte Luft verwendet.

**Claims**

1. A process for the preparation of silicon nitride having a crystallite size of 40 to 60 nm and a specific surface area according to BET of 21 to 40 m$^2$/g, which comprises bringing amorphous silicon nitride and/or amorphous silicon nitridoimide into surface contact with
   a) a gas that contains water vapor or
   b) water-containing solvents
   and heating the surface-contacted amorphous silicon nitride and/or amorphous silicon nitridoimide under a nitrogen atmosphere at a heating rate of at least 1°C/minute to above the crystallization temperature of $\alpha$-silicon nitride, which is above 1100°C.

2. The process as claimed in claim 1, wherein the amorphous silicon nitride used was obtained by reaction of SiCl$_4$ with NH$_3$, followed by heating in an ammonia atmosphere to about 1000°C.

3. The process as claimed in claim 1, wherein the amorphous silicon nitride used is a partially hydrolyzed silicon nitride obtained by reaction of SiCl$_4$ with moist NH$_3$, followed by heating in an ammonia atmosphere to about 1000°C.

4. The process as claimed in any one of claims 1 to 3, wherein the amorphous silicon nitride is contacted with the gas that contains water vapor for 0.5 to 30 hours, in particular 1 to 8 hours.

5. The process as claimed in any one of claims 1 to 3, wherein the water-containing solvent used is i-propanol containing 0.5 to 10% by volume of water.

6. The process as claimed in claim 4, wherein the gas used as containing water vapor is untreated air.

**Revendications**

1. Procédé de production de nitrure de silicium ayant une grosseur de cristallite de 40 à 60 nm et une surface spécifique selon BET de 21 à 40 m$^2$/g, caractérisé en ce qu'on met du nitrure de silicium amorphe et/ou de l'imide de nitrure de silicium amorphe en contact superficiel avec
   a) un gaz contenant de la vapeur d'eau
   ou
   b) des solvants aqueux,
   et qu'on chauffe le nitrure de silicium amorphe et/ou l'imide de nitrure de silicium amorphe ayant subi le contact superficiel sous une atmosphère d'azote, pour une vitesse de montée en température d'au moins 1°C/min, jusqu'au-delà de la température de cristallisation du nitrure d'$\alpha$-silicium, laquelle est supérieure à 1 100°C.

2. Procédé selon la revendication 1, caractérisé en ce qu'on utilise un nitrure de silicium amorphe obtenu par réaction de SiCl$_4$ avec NH$_3$, puis chauffage à environ 1 000°C dans une atmosphère d'ammoniac.

3. Procédé selon la revendication 1, caractérisé en ce qu'on utilise comme nitrure de silicium amorphe un nitrure de silicium partiellement hydrolysé obtenu par réaction de SiCl$_4$ avec du NH$_3$ humide, puis chauffage à environ 1 000°C dans une atmosphère d'ammoniac.

4. Procédé selon une des revendications 1 à 3, caractérisé en ce qu'on met le nitrure de silicium amorphe en contact avec un gaz contenant de la vapeur d'eau pendant 0,5 à 30 h, notamment pendant 1 à 8 h.

5. Procédé selon une des revendications 1 à 3, caractérisé en ce qu'on utilise comme solvant aqueux de l'isopropanol contenant 0,5 à 10 % en volume d'eau.

6. Procédé selon la revendication 4, caractérisé en ce qu'on utilise de l'air non traité comme gaz contenant de la vapeur d'eau.